# EUROPEAN PATENT APPLICATION

(11) **EP 2 682 937 A1**
(43) Date of publication of application: **08.01.2014**
(21) Application number: 13168445.8
(22) Date of filing: 20.05.2013
(51) Int. Cl.: G09G 5/00, G06F 3/0482, H04N 5/44, H04N 5/445, H04N 5/45, H04N 21/442, H04N 21/482, H04N 21/485

(54) **Display apparatus and control method thereof**

(30) Priority: 03.07.2012 KR 20120072306
(71) Applicant: Samsung Electronics Co., Ltd, Gyeonggi-do 443-742 (KR)
(72) Inventor: Kim, Ji-won, Seoul (KR); Cho, Young-hun, Gyeonggi-do (KR)
(74) Representative: Hewett, Jonathan Michael Richard

(57) **Abstract**

A display apparatus includes: a display; an image receiver which receives image signals from a plurality of image sources; a main controller which performs a control function to generate a main image which corresponds to any one of the received image signals; and a graphics controller which performs a control function to generate source information related to a connected image source through the image receiver and to display an image which corresponds to the received image signal in the source information.

## Description

The present invention relates to a display apparatus and a control method thereof. More particularly, the present invention relates to a display apparatus connected to an external image source to receive and display an image signal.

A display apparatus is a device that receives an image signal from an external image source and processes the image signal to be displayed. The display apparatus may be configured as a TV system. A recent digital TV system may receive not only a broadcast signal but may also receive an image signal from various external image sources, such as a DVD player, a PC and a set-top box, thereby displaying the signals.

To receive an image signal from an external image source, an interface that is a data transmission channel between the display apparatus and the external image source is needed. Video Graphic Array (VGA) and Digital Visual Interface (DVI) standards are used for an image signal. Recently, a High Definition Multimedia Interface (HDMI) standard which enables transmission of both an image signal and an audio signal and optional information, has become widely used.

A display apparatus may include a plurality of interface ports in accordance with interface standards to be connected to various external image sources. In this case, it is necessary to provide a user with information relating to which external image source is connected to each port.

A known display apparatus briefly presents information related to a connected external image source in a text form only. Thus, a user does not know which content is received from which image source.

An aspect of one or more exemplary embodiments of the present invention is to provide a display apparatus capable of providing a user with source information related to a plurality of connected image sources by using image signals input from the external image sources, and a control method thereof.

The foregoing and/or other aspects may be achieved by providing a display apparatus including: a display; an image receiver which receives image signals from a plurality of image sources; a main controller which controls to generate a main image which corresponds to any one of the received image signals; and a graphics controller which controls to generate source information related to a connected image source through the image receiver, and to display an image which corresponds to the received image signal in the source information.

The display apparatus may further include a video generator which generates a video layer comprising the main image; and a graphics generator which generates a graphic layer comprising the source information.

The main controller may compose the video layer and the graphic layer to be displayable on the display.

The image receiver may include a switching module which switches the image signal, and the main controller may control the switching module so that the main image is input to the video generator and a sub-image among the received image signals, except for the main image, is input to the graphics generator.

The graphics controller may control the graphics generator so that the input sub-image is displayed on the source information.

The main image and the sub-image may be respectively input to the video generator and the graphics generator through separate interfaces.

The main image may be input to the video generator through a high definition multimedia interface (HDMI) and the sub-image may be input to the graphics generator through universal serial bus (USB) or peripheral component interconnect express (PCIe).

The graphics controller may control to adjust a size and position of the image within the source information, based on a user selection.

The display apparatus may further include a storage which stores a captured image of the image included in the source information and an icon image which corresponds to the image sources.

The graphics controller may control to include the captured image or the icon image stored in the storage in the source information when at least one of the image sources is off.

The foregoing and/or other aspects may be also achieved by providing a display apparatus including: a display; an image receiver which receives image signals from a plurality of image sources; a video generator which generates a video layer through a first interface by processing a main image input from among the received image signals; a graphics generator which generates a graphic layer by processing through a second interface a sub-image input through a second interface from among the received image signals; and a controller which controls to compose the video layer and the graphic layer to be displayed onto the display.

The graphic layer may include, through the image receiver source information related to a connected image source, and the source information comprises the sub-image.

The foregoing and/or other aspects may be also achieved by providing a method of controlling a display apparatus, the method including: receiving an image signal from at least one image source; generating a main image which corresponds to any received image signals; and generating source information related to the connected image source, wherein the source information comprises an image which corresponds to the received image signal.

The method may further include composing the main image and the source information for display.

The generating the source information may include a sub-image from among a received image signal, except for the main image, in the source information.

The main image and the sub-image may be respectively processed in separate paths through separate interfaces.

The method may further include switching the main image and the sub-image to the respective paths.

The method may further include adjusting a size and position of the sub-image within the source information, based on a user selection.

The method may further include storing a captured image of the sub-image, wherein the source information comprises the captured image of the sub-image or an icon image which corresponds to the image source, when at least one of the image sources is off.

An exemplary embodiment may further provide a display apparatus including: a display; a controller which performs a control function to generate an image which corresponds to a received image signal; and a graphics controller which performs a control function to generate source information related to a connected image source and displays in the source information an image which corresponds to the received image signal.

As described above, according to one or more exemplary embodiments, there is provided a display apparatus capable of providing a user with source information related to each of a plurality of connected image sources using image signals input from the external image sources, and a control method thereof.

The above and/or other aspects will become apparent and more readily appreciated from the following description of the exemplary embodiments, taken in conjunction with the accompanying drawings, in which:
FIG. 1 briefly illustrates a display apparatus and external image sources according to an exemplary embodiment.
FIG. 2 is a block diagram of the display apparatus according to an exemplary embodiment.
FIGS. 3 and 4 illustrate a screen presenting a main image and source information.
FIG. 5 is a flowchart illustrating a control method of the display apparatus according to an exemplary embodiment.

Below, exemplary embodiments will be described in detail with reference to accompanying drawings so as to be easily understood by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

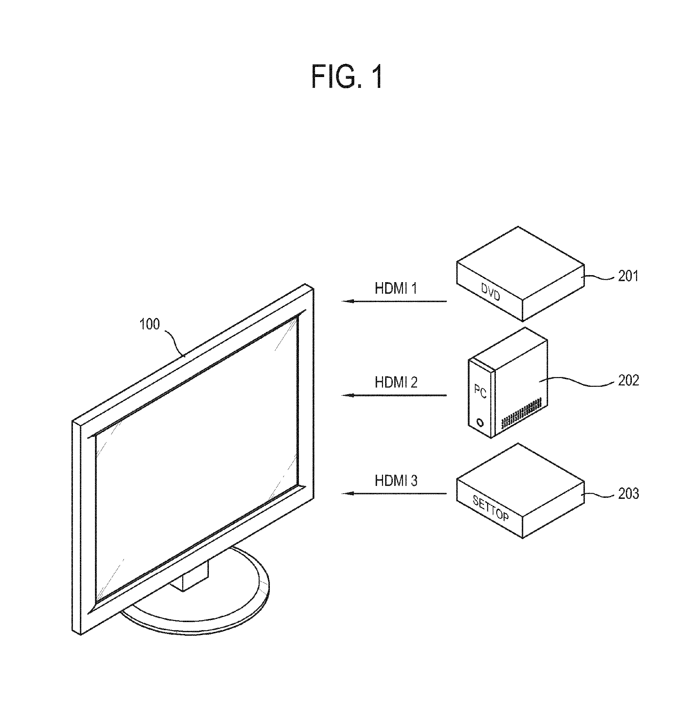

FIG. 1 illustrates a display apparatus 100 and a plurality of external image sources 201, 202, and 203 according to an exemplary embodiment.

As shown in FIG. 1, the display apparatus 100 may be configured as a TV and may be connected to an external image source, such as a DVD player 201, a PC 202, and a set-top box 203, via a cable which receives an image signal. Although FIG. 1 illustrates only a high definition multimedia interface (HDMI) as an interface between the display apparatus 100 and the external image sources 201, 202, and 203, interfaces in other known standards, for example, video graphic arrays (VGA) and digital visual interface (DVI), may be also used. Hereinafter, for convenience, the image sources 201, 202, and 203 are described as being connected through three HDMI ports.

The image sources 201, 202, and 203 are connected to the display apparatus 100 through ports provided on an outside of the display apparatus 100, and the display apparatus 100 may display source information including information related to the image sources 201, 202, and 203 connected through the ports, thereby informing a user whether the image sources 201, 202, and 203 are connected.

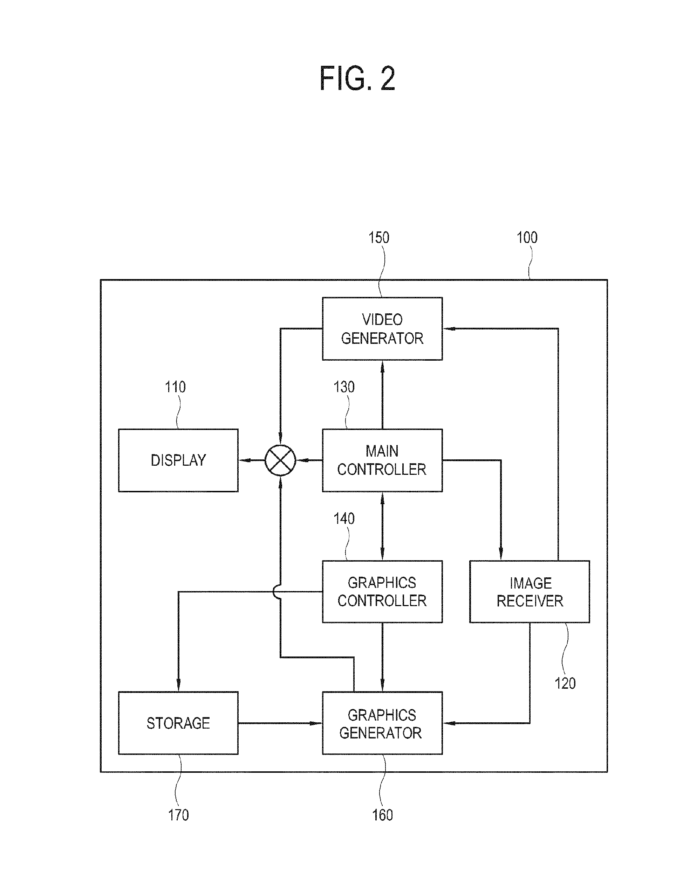

FIG. 2 is a block diagram of the display apparatus 100 according to an exemplary embodiment.

As shown in FIG. 2, the display apparatus 100 includes a display 110, an image receiver 120, a main controller 130, and a graphics controller 140, and may further include a video generator 150, a graphics generator 170, and storage 170.

The display 110 displays an image generated according to a control function of the main controller 130 and the graphics controller 140, which will be described. The display 110 may be implemented as various types of devices, such as a plasma display panel (PDP), a liquid crystal display (LCD), an organic light emitting diode (OLED), a flexible display, etc., without being particularly limited to any particular type of device.

The image receiver 120 receives an image signal from a plurality of image sources. The image receiver 120 may be configured as a plurality of interface ports in accordance with interface standards, such as VGA, DVI, and HDMI, and may receive an image signal from various external image sources, for example, a DVD player, a PC, and a set-top box.

The main controller 130 controls to generate a main image which corresponds to any one image signal received through the image receiver 120. In an exemplary embodiment, the main image refers to an image source to be displayed on the display apparatus 100 based on a user selection; i.e., an image displayed on an entire screen of the display 110. The main controller 130 is configured as a central processing unit (CPU) and may be responsible for overall control of individual components of the display apparatus 100 in addition to controlling generation of the main image.

The display apparatus 100 according to an exemplary embodiment may further include the video generator 150 which generates a video layer including the main image. When a plurality of image signals are received from the external image sources through the image receiver 120, an image signal which corresponds to the main image is input to the video generator 150 through an interface between the image receiver 120 and the video generator 150. The main image means an image selected by a user who intends to watch the video. The video generator 150 processes the input image signal with a series of image processing processes, such as decoding, de-interlacing, noise reduction, detail enhancement, and scaling, according to a control function of the main controller 130 to generate the main image, and may be configured as a circuit board on which a circuit system is mounted, the circuit system having various chip sets conducting such image processing processes.

The graphics controller 140 performs a control function to generate source information related to a connected image source. The graphics controller 140 may be configured as a graphics processor (GPU) responsible for processing graphics in the display apparatus 100 and serves to provide graphics processing of source information, a display control screen, and an optional information screen. The source information is for informing a user of information related to a connected external image source, which may include a port connected with an image source, an interface type, an image source name, or the like.

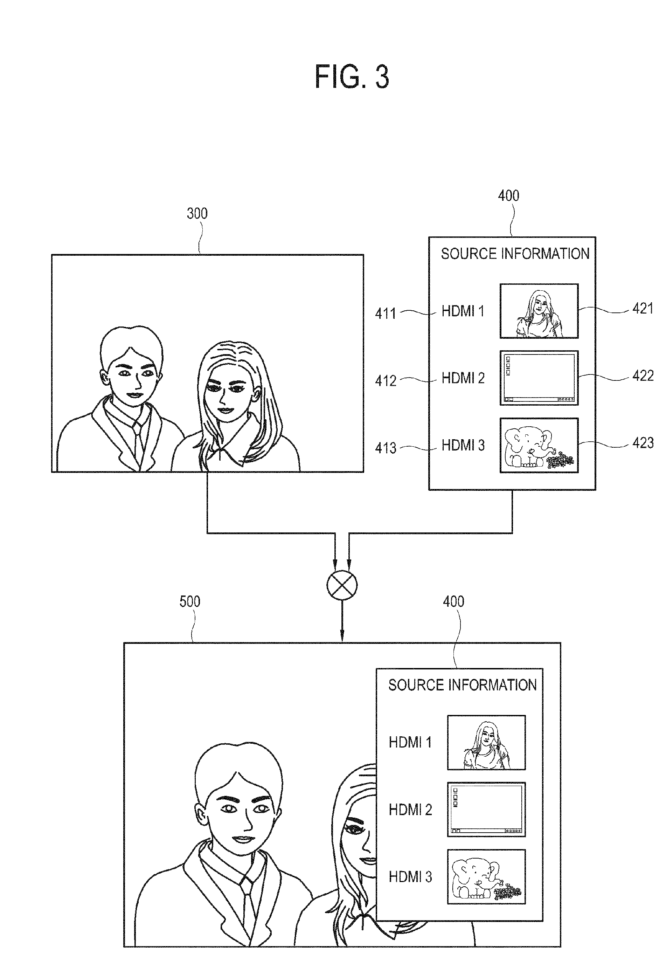

The display apparatus 100 according to the exemplary embodiment may further include the graphics generator 170 which generates a graphic layer including source information. The graphics generator 160 generates a graphic layer according to a control function of the graphics controller 140, separately from the main image generated by the video generator 150. The graphics generator 160 may generate a graphic layer by performing at least part of the foregoing image processing processes conducted by the video generator 150. That is, as shown in FIG. 3, a video layer 300 and a graphic layer 400 are separate image layers, generated by the video generator 150 and the graphics generator 160, respectively.

The graphics controller 140 controls an image which corresponds to an image signal received through the image receiver 120 to be displayed within the source information when generating the source information. That is, the graphics controller 140 controls a video to be displayed on the display 110 to be displayed in reduced size as a part of the source information 421, 422, or 423. As shown in FIG. 3, an image 421 reproduced by a DVD player connected through an HDMI 1 port, an image 422 generated by a PC connected through an HDMI 2 port, and an image 423 generated by a set-top box connected through an HDMI 3 port may be displayed within the source information.

A known display apparatus displays text-based source information, so that a user cannot identify which image is actually input through an image source. The exemplary embodiment displays an image generated by a connected image source directly to the user as a video, thereby providing source information so that a user can easily recognize which image the user can watch.

When displaying an image in the source information, the graphics controller 140 may control to adjust a size and position of the image within the source information based on a user selection and may generate and present a UI for user selection.

It is difficult to process images from all connected external image sources using a single path and to directly display the images within the source information for generating source information including an image received from an external source. That is, since source information is generated according to a control function of the graphics controller 140, it is difficult to transmit and process a sub-image together with a main image via a path for processing the main image and a circuit configuration becomes inevitably complicated since a great deal of lines are needed to transmit an image signal.

In order to solve the foregoing problems, the display apparatus 100 according to the exemplary embodiment is configured such that sub-images input through HDMIs 1, 2, and 3 are input to the graphics generator 160 through a separate interface from that for the main image. That is, an image signal which corresponds to the main image selected by a user is input from the image receiver 120 to the video generator 150, while an image signal which corresponds to the sub-image is input to the graphics generator 160 and is processed according to a control function of the graphics controller 140, thereby displaying each image within the source information. Here, the main image may be input to the video generator 150 through an HDMI, while the sub-image may be input to the graphics generator 160 through universal serial bus (USB) or peripheral component interconnect express (PCIe).

The image receiver 120 may include a switching module(not shown) to perform a switching function such that the main image is input to the video generator 150 and the sub-image is input to the graphics generator 160. The switching module switches to lead a main image selected by the user and a sub-image other than the main image among image signals input from a connected image source to respective paths to the video generator 150 and the graphics generator 160 according to a control function of the main controller 130. The switching module may be implemented as a known switching element.

The main controller 130 composes the video layer and the graphic layer, which are respectively generated by the video generator 150 and the graphics generator 160 to be displayed on the display 110. Accordingly, both a main image to be watched and a sub-image are displayed together as a video, so that a user easily and visually identify whether which image is generated through an external image source.

The display apparatus 100 may further include the storage 170 which stores a captured image of an included image and an icon image corresponding to each image source. The storage 170 may be configured as a known nonvolatile memory, such as a flash memory, and may store other data than the captured image and the icon image. Further, when at least one of the image sources connected through the image receiver 120 is off, the graphics controller 140 generate source information including a captured image or an icon image which corresponds to the off image source stored in the storage 170 instead of a sub-image.

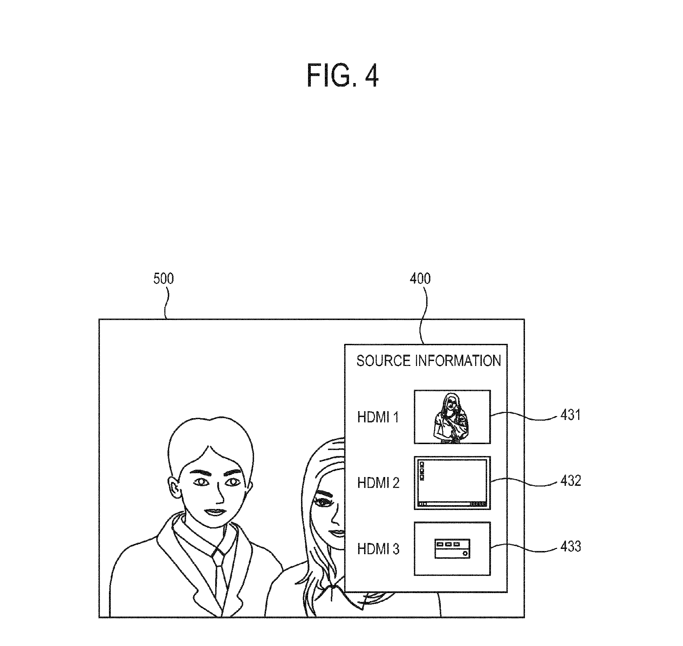

As shown in FIG. 4, when the DVD player connected through the HDMI 1 is off from among the connected external sources, there is no input image signal, and thus the graphics controller 140 performs a control function to display a captured image 431 stored in the storage 170 in the source information. Here, the captured image 431 may be one of periodically captured images when an image signal is input from the DVD player. Alternatively, when the set-top box connected through the HDMI 3 is off, the graphics controller 140 performs a control function to display an icon image 433 stored in the storage 170 in the source information. The icon image 433 corresponds to each image source, which may be stored in advance in the storage 170.

As described above, the display apparatus 100 according to an exemplary embodiment displays an input image within the source information related to the plurality of image sources, so that a user can easily recognize which image signal is being input. Further, to this end, an additional interface is designed, thereby preventing problems from occurring in graphics processing and avoiding a circuit configuration from becoming complicated.

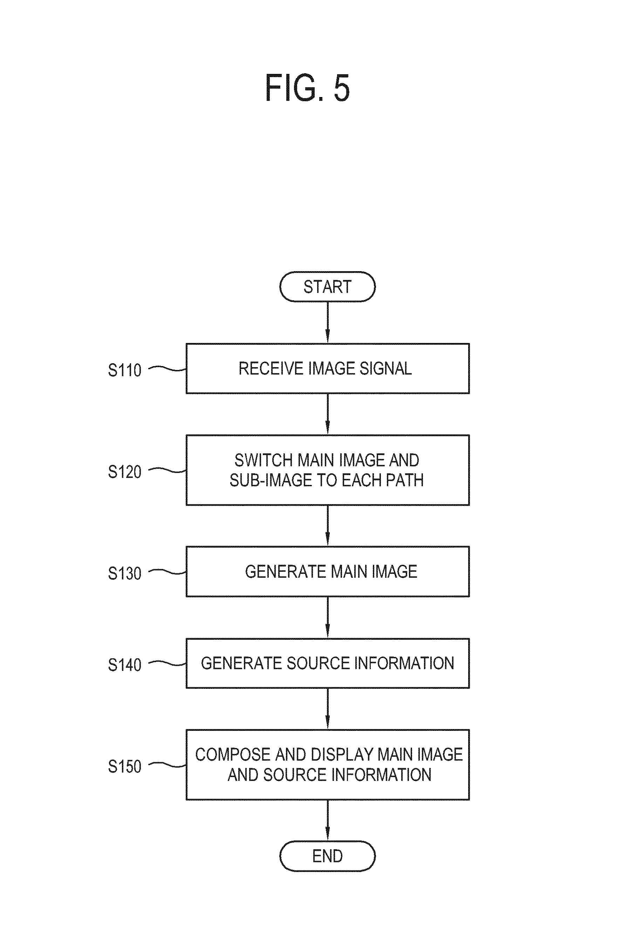

FIG. 5 is a flowchart which illustrates a method of controlling the display apparatus 100 according to an exemplary embodiment.

The display apparatus 100 may be configured as a TV and may be connected to an external image source to receive an image signal.

The display apparatus 100 receives an image signal from each of a plurality of external image sources, such as a DVD player, a PC, and a set-top box, which are connected to a plurality of interface ports provided on an outside of the display apparatus 100 (S110). The display apparatus 100 switches the image signal to be processed in each path (S120).

When the image signals are received, any one signal selected by a user from among the image signals is processed in order to generate a main image (S130).

The display apparatus 100 generates, separately from the main image (S140), source information related to the connected image sources. Here, since the main image and the source information are input to separate paths and generated, generation of the main image (S130) and generation of the source information (S140) do not occur at the same time.

The source information is for informing the user of information related to a connected external image source, which may include a port connected with an image source, an interface type, an image source name, or the like. In particular, the display apparatus 100 of an exemplary embodiment may generate the source information by including an image which corresponds to a receive image signal in the source information, and may include a sub-image in the source information, except for the main image. Generation of the main image and the source information has been described above with reference to FIG. 3.

In displaying an image input to the source information when the source information is generated, a size and position of the image may be adjusted in the source information, through a user selection.

It is difficult to process images from all connected external image sources using a single path and to directly display the images within the source information for generation of the source information. Thus, the display apparatus 100 switches the main image and the sub-image among the input image signals (S120) and processes the images to separate paths through separate interfaces. For example, the main image may be input to a video processor 150 through an HDMI and generated, while the source information may be input to a graphics processor 160 through USB or PCIe and generated.

The display apparatus 100 composes the main image and the source information to display a single image (S150), which has been illustrated with reference to FIG. 3.

When at least one of the image sources connected to the display apparatus 100 is off, there is no input image signal, and thus the display apparatus 100 may display a captured image of the sub-image or an icon image to be included in the source information. To this end, the captured image of the sub-image may be periodically stored in a memory.

As described above, according to method of controlling the display apparatus, an input image is displayed within the source information related to the plurality of image sources, so that a user may easily recognize which image signal is input. Further, to this end, an additional interface is designed, thereby preventing problems occurring in graphics processing and avoiding a circuit configuration from becoming complicated.

Although a few exemplary embodiments have been shown and described, it will be appreciated by those skilled in the art that changes may be made in these exemplary embodiments without departing from the invention, the scope of which is defined in the appended claims.

## Claims

1. A display apparatus comprising:
a display;
an image receiver arranged to receive a respective image signal from at least one image source;
a main controller arranged to perform a control function to generate a main image which corresponds to one of the received image signals; and
a graphics controller arranged to perform a control function to generate source information related to an image source connected through the image receiver and to display in the source information an image which corresponds to the respective received image signal from the connected image source.

2. The display apparatus of claim 1, further comprising:
a video generator which generates a video layer comprising the main image; and
a graphics generator which generates a graphic layer comprising the source information.

3. The display apparatus of claim 2, wherein the main controller composes the video layer and the graphic layer to be displayed on the display.

4. The display apparatus of claim 2, wherein the image receiver comprises a switching module which switches the image signal, and the main controller controls the switching module so that the main image is input to the video generator and a sub-image from among the received image signals, except for the main image, is input to the graphics generator.

5. The display apparatus of claim 4, wherein the graphics controller controls the graphics generator to display the input sub-image on the source information.

6. The display apparatus of claim 5, wherein the main image and the sub-image are respectively input to the video generator and the graphics generator through separate interfaces.

7. The display apparatus of claim 6, wherein the main image is input to the video generator through a high definition multimedia interface (HDMI) and the sub-image is input to the graphics generator through a universal serial bus (USB) or through a peripheral component interconnect express (PCIe).

8. The display apparatus of any one of the preceding claims, further comprising a storage which stores a captured image of the image included in the source information and an icon image which corresponds to the image sources.

9. The display apparatus of claim 8, wherein the graphics controller performs a control operation to compose the captured image or the icon image stored in the storage in the source information when at least one of the image sources is off.

10. A method of controlling a display apparatus, the method comprising:
receiving a respective image signal from at least one connected image source;
generating a main image which corresponds to one of the received image signals; and
generating source information relating to a connected image source,
wherein the source information comprises an image which corresponds to the respective received image signal from the connected image source.

11. The control method of claim 10, further comprising composing the main image and the source information to be displayed on a display.

12. The control method of claim 11, wherein the generating the source information comprises including a sub-image from among the received image signals, except for the main image, in the source information.

13. The control method of claim 12, wherein the main image and the sub-image are respectively processed on separate paths through separate interfaces.

14. The control method of claim 13, further comprising switching the main image and the sub-image to the respective paths.

15. The control method of any one of claims 12 to 14, further comprising storing a captured image of the sub-image, wherein the source information comprises the captured image of the sub-image or an icon image which corresponds to the image source when at least one of the image sources is off.
